# EUROPEAN PATENT APPLICATION

(11) **EP 4 255 020 A1**
(43) Date of publication of application: **04.10.2023**
(21) Application number: 22164996.5
(22) Date of filing: 29.03.2022
(51) Int. Cl.: H04W 36/00, H04W 76/27, H04W 4/06

(54) **DYNAMIC SWITCHING BETWEEN DIFFERENT RRC CONNECTION STATES DURING MBS TRAFFIC RECEPTION**

(71) Applicant: Nokia Technologies Oy, 02610 Espoo (FI)
(72) Inventor: NASSAR, Mohamed Amin, 81477 Munich (DE); NAVRÁTIL, David, 00840 Helsinki (FI); PRASAD, Athul, Naperville, IL, 60563 (US); GODIN, Philippe, 78000 Versailles (FR); SEBIRE, Benoist Pierre, Tokyo, 174-0064 (JP)
(74) Representative: Nokia EPO representatives

(57) **Abstract**

The present disclosure relates to techniques that allows a User Equipment (UE) to dynamically switch between different Radio Resource Control (RRC) connection states for a Multicast Broadcast Service (MBS) traffic reception. More specifically, when a first trigger event occurs in the UE in an RRC connected state, the UE is configured to request a RAN node or a Core Network (CN) entity to switch from the MBS traffic reception in the RRC connected state to the MBS traffic reception in an RRC idle or inactive state. When a second trigger event occurs in the UE in the RRC idle or inactive state, the UE is configured to request the RAN node or the CN entity to switch from the MBS traffic reception in the RRC idle or inactive state to the MBS traffic reception in the RRC connected state. The RAN node or CN entity may decide on accepting or rejecting the UE requests based on at least one MBS-associated requirement, for example, defined by a communication service operator.

## Description

### TECHNICAL FIELD

The present disclosure relates generally to the field of wireless communications, and particularly to apparatuses, methods and computer readable mediums for dynamically switching between different Radio Resource Control (RRC) connection states for Multicast or Broadcast Service (MBS) traffic reception.

### BACKGROUND

A Multicast or Broadcast Service (MBS) is a service that allows source network nodes in a wireless communication network to transmit a single copy of the same data or traffic to an address that causes the data to be delivered to multiple recipients (e.g., multiple User Equipments (UEs)). More specifically, the MBS implies that only one copy of a message passes over any link in the wireless communication network and multiple copies of the message are made only where communication paths diverge. From the network perspective, the MBS dramatically reduces overall bandwidth consumption because the data are replicated in the wireless communication network at appropriate points rather than in end points. The difference between multicast and broadcast services is the network's ability to keep track of UEs receiving the services. For multicast, the network would have an accurate estimate of the UEs receiving the service, whereas for broadcast, in some scenarios the network might not be aware of all the UEs receiving the service. The MBS service could imply either a multicast or broadcast service. Given this, the MBS supports the transmission of multimedia information, such as real-time video and audio, still video, and text information, and may simultaneously provide video data as well as audio data over a broadcast channel.

When a UE receives an MBS traffic in a Radio Resource Control (RRC) inactive state (i.e., RRC_INACTIVE state) or an RRC idle state (i.e., RRC_IDLE state), it may be required for the UE to switch to an RRC full or active connection (i.e., RRC_CONNECTED state) to continue the MBS traffic reception. For example, this scenario may happen when the UE becomes in good condition (e.g., a UE battery level is high; hence, there are no worries about its power consumption), and/or the UE "cares" more about an MBS quality, and/or when there are other communication services to be run by the UE that require the UE to be in RRC_CONNECTED state. RRC_CONNECTED state implies that the UE has an active connection with a Radio Access Network (RAN) and a Core Network (CN), with the UE context stored in a RAN node (e.g., gNB). The UE will be performing active measurements and reporting in this state.

At the same time, the reverse scenario may also happen, i.e., the UE may need to switch from RRC_CONNECTED state to RRC_INACTIVE/RRC_IDLE state to perform the MBS traffic reception. For example, this reverse scenario can happen when the UE battery level drops below a threshold (i.e., is low), for which reason the UE should "care" about saving its power (even though at the cost of the degradation of the MBS quality), and/or when there are no other communication services to be run by the UE that require the UE to stay in RRC_CONNECTED state.

The above-described two scenarios show the need for the UE to be able to request the network to enable/disable the MBS traffic reception in RRC_IDLE/RRC_INACTIVE states.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that allows a UE to dynamically switch between different RRC connection states for an MBS traffic reception.

The above objective is achieved by the features of the independent claims in the appended claims. Further embodiments and examples are apparent from the dependent claims, the detailed description and the accompanying drawings.

According to a first aspect, a UE in a wireless communication network is provided. The UE comprises at least one processor and at least one memory. The at least one memory comprises a computer program code. The at least one memory and the computer program code are configured to, with the at least one processor, cause the UE to operate at least as follows. At first, the UE is caused to perform an MBS traffic reception in an RRC connected state (i.e., RRC_CONNECTED state). Then, if a first trigger event occurs in the RRC connected state, the UE is caused to transmit, to a RAN node or a Core Network (CN) entity, a first UE request for switching from the MBS traffic reception in the RRC connected state to the MBS traffic reception in an RRC idle or inactive state (i.e., RRC_IDLE or RRC_INACTIVE state, respectively). In this configuration, the UE may request the dynamical switching from the RRC connected state to the RRC idle or inactive state for the MBS traffic reception. Said dynamical switching may, for example, allow the UE to save its power consumption (e.g., when a battery level is low).

In one example embodiment of the first aspect, the at least one memory and the computer program code are further configured to, with the at least one processor, cause the UE to receive, from the RAN node or the CN node, a first indication that the first UE request is granted or rejected, and perform the MBS traffic reception in the RRC idle or inactive state. In this case, the UE may properly perform said switching from the RRC connected state to the RRC idle or inactive state for the MBS traffic reception.

In one example embodiment of the first aspect, the at least one memory and the computer program code are configured to, with the at least one processor, cause the UE to transmit, to the CN entity, the first UE request as a Protocol Data Unit (PDU) session modification request, and receive, from the CN entity, the first indication as a PDU session modification command. By so doing, the UE may use the existing PDU modification procedure to inform the CN entity (e.g., a Session Management Function (SMF)) of its wish/request for switching from the MBS traffic reception in the RRC connected state to the MBS traffic reception in the RRC idle or inactive state.

In one example embodiment of the first aspect, the at least one memory and the computer program code are configured to, with the at least one processor, cause the UE to transmit, to the RAN node (e.g., a gNB), the first UE request by using an RRC signalling, and receive, from the RAN node, the first indication by using the RRC signalling. By using the RRC signalling, the UE may efficiently inform the RAN node of its wish/request for switching from the MBS traffic reception in the RRC connected state to the MBS traffic reception in the RRC idle or inactive state.

In one example embodiment of the first aspect, the at least one memory and the computer program code are configured to, with the at least one processor, cause the UE to transmit, to the CN entity, the first UE request as a mobility registration request and receive, from the CN entity, the first indication as a mobility registration accept message. Thus, the UE may use the existing mobility registration procedure to inform the CN entity (e.g., an Access and Mobility Management Function (an AMF)) of its wish/request for switching from the MBS traffic reception in the RRC connected state to the MBS traffic reception in the RRC idle or inactive state.

In one example embodiment of the first aspect, the first trigger event comprises at least one of the following events: a battery level of the UE goes below a threshold, a priority degree of an MBS traffic priority changes from a high priority value to a low priority value, and a priority degree of a packet error rate of the MBS traffic reception changes from a high priority value to a low priority value. In this embodiment, if higher packet error rates are allowed (e.g., based on related 5G Quality-of-Service (QoS) Indicator (5QI) parameters), the UE may receive an MBS traffic in the RRC idle or inactive state (without feedback or link adaptation), and hence the packet error rates become less important for the UE. The vice versa is also true, in the scenario where the UE is in the RRC idle or inactive state and the packet error rates are higher than the value configured for the MBS traffic, hence triggering the UE to request for the transition to the RRC connected state. By using such trigger events, the UE may efficiently (in terms of a timepoint selection) request said dynamic switching to the MBS traffic reception in the RRC idle or inactive state.

In one example embodiment of the first aspect, the at least one memory and the computer program code are further configured to, with the at least one processor, cause the UE to transmit, to the RAN node or the CN entity, a second UE request for switching from the MBS traffic reception in the RRC idle or inactive state to the MBS traffic reception in the RRC connected state or a third UE request for switching between the MBS traffic reception in the RRC inactive state and the MBS traffic reception in the RRC idle state. The second UE request is transmitted when a second trigger event occurs in the RRC idle or inactive state, while the third UE request is transmitted when a third trigger event occurs in the RRC idle or inactive state. In this example embodiment, the at least one memory and the computer program code are further configured to, with the at least one processor, cause the UE to receive, from the RAN node or the CN entity, a second indication that the second UE request is granted or rejected, or a third indication that the third UE request is granted or rejected. By so doing, the UE may efficiently request and perform the dynamical switching between the RRC idle and inactive states or from the RRC idle or inactive state to the RRC connected state for the MBS traffic reception. Said switching between the RRC idle and inactive states for the MBS traffic reception may be performed, for example, when the UE is interested in conserving a battery power, when there is no other active traffic received by the UE other than the MBS service, etc. Said switching from the RRC idle or inactive state to the RRC connected state for the MBS traffic reception may be performed, for example, when the UE wants to achieve a better MBS quality.

In one example embodiment of the first aspect, the at least one memory and the computer program code are configured to, with the at least one processor, cause the UE to transmit, to the CN entity, each of the second UE request and the third UE request as a PDU session modification request, and receive, from the CN entity, each of the second indication and the third indication as a PDU session modification command. By so doing, the UE may use the existing PDU modification procedure to inform the CN entity (e.g., an SMF) of its wish/request for performing said switching between the RRC idle and inactive states or from the RRC idle or inactive state to the RRC connected state for the MBS traffic reception.

In one example embodiment of the first aspect, the at least one memory and the computer program code are configured to, with the at least one processor, cause the UE to transmit, to the RAN node, each of the second UE request and the third UE request by using an RRC signalling, and receive, from the RAN node, each of the second indication and the third indication by using the RRC signalling. By using the RRC signalling (or RRC messages), the UE may efficiently inform the RAN node of its wish/request for performing said switching between the RRC idle and inactive states or from the RRC idle or inactive state to the RRC connected state for the MBS traffic reception.

In one example embodiment of the first aspect, the at least one memory and the computer program code are configured to, with the at least one processor, cause the UE to transmit, to the CN entity, each of the second UE request and the third UE request as a mobility registration request and receive, from the CN entity, each of the second indication and the third indication as a mobility registration accept message. Thus, the UE may use the existing mobility registration procedure to inform the CN entity (e.g., an AMF) of its wish/request for switching between the RRC idle and inactive states or from the RRC idle or inactive state to the RRC connected state for the MBS traffic reception.

In one example embodiment of the first aspect, the second and third trigger events are defined as follows. The second trigger event comprises at least one of the following events: (i) a battery level of the UE goes above a threshold, (ii) a priority degree of an MBS traffic priority changes from a low priority value to a high priority value, and (iii) a priority degree of a packet error rate of the MBS traffic reception changes from a low priority value to a high priority value. The third trigger event comprises at least one of: (i) the battery level of the UE goes down and reaches a first threshold or goes up and reaches a second threshold, and (ii) there is an increase or decrease in the priority degree of the packet error rate of the MBS traffic reception. By using such trigger events, the UE may efficiently (in terms of a timepoint selection) request said dynamic switching between the RRC idle and inactive states or from the RRC idle or inactive state to the RRC connected state for the MBS traffic reception.

According to a second aspect, a CN entity in a wireless communication system is provided. The CN entity comprises at least one processor and at least one memory. The at least one memory comprises a computer program code. The at least one memory and the computer program code are configured to, with the at least one processor, cause the CN entity to operate at least as follows. At first, the CN entity is caused to receive, from a UE, a first UE request for switching from an MBS traffic reception in an RRC connected state to the MBS traffic reception in an RRC idle or inactive state. Next, the CN entity is caused to decide that the first UE request is granted or rejected based on at least one MBS-associated requirement. In this configuration, in response to the UE request, the CN entity may allow the UE to dynamically switch from the RRC connected state to the RRC idle or inactive state for the MBS traffic reception. Said dynamical switching may, for example, allow the UE to save its power consumption (e.g., when a battery level is low).

In one example embodiment of the second aspect, the at least one memory and the computer program code are further configured to, with the at least one processor, cause the CN entity to transmit, to the UE and a RAN node serving the UE, a first indication that the first UE request is granted or rejected. In this case, the CN entity may properly inform the UE of said allowed switching from the RRC connected state to the RRC idle or inactive state for the MBS traffic reception.

In one example embodiment of the second aspect, the at least one memory and the computer program code are configured to, with the at least one processor, cause the CN entity to receive, from the UE, the first UE request as a PDU session modification request, and transmit, to the UE and the RAN node serving the UE, the first indication as a PDU session modification command. By using the existing PDU modification procedure, the CN entity may be efficiently informed of the UE wish/request for performing said switching to the MBS traffic reception in the RRC idle or inactive state.

In one example embodiment of the second aspect, the at least one memory and the computer program code are configured to, with the at least one processor, cause the CN entity to receive, from the UE, the first UE request as a mobility registration request, and transmit, to the UE and the RAN node serving the UE, the first indication as a mobility registration accept message. By using the existing mobility registration procedure, the CN entity may be efficiently informed of the UE wish/request for performing said switching to the MBS traffic reception in the RRC idle or inactive state.

In one example embodiment of the second aspect, the at least one memory and the computer program code are further configured to, with the at least one processor, cause the CN entity to receive, from the UE, a second UE request for switching from the MBS traffic reception in the RRC idle or inactive state to the MBS traffic reception in the RRC connected state, or a third UE request for switching between the MBS traffic reception in the RRC inactive state and the MBS traffic reception in the RRC idle state. In this example embodiment, the at least one memory and the computer program code are further configured to, with the at least one processor, cause the CN entity to decide that the second UE request or the third UE request is granted or rejected based on the at least one MBS-associated requirement, and transmit, to the UE and the RAN node serving the UE, a second or third indication that the second or third UE request is granted or rejected. By so doing, the CN entity may allow the UE to dynamically switch between the RRC idle and inactive states or from the RRC idle or inactive state to the RRC connected state for the MBS traffic reception. Said switching between the RRC idle and inactive states for the MBS traffic reception may be performed, for example, when the UE is interested in conserving a battery power, when there is no other active traffic received by the UE other than the MBS service, etc. Said switching from the RRC idle or inactive state to the RRC connected state for the MBS traffic reception may be performed, for example, when the UE wants to achieve a better MBS quality.

In one example embodiment of the second aspect, the at least one memory and the computer program code are configured to, with the at least one processor, cause the CN entity to receive, from the UE, each of the second UE request and the third UE request as a PDU session modification request, and transmit, to the UE and the RAN node serving the UE, each of the second indication and the third indication as a PDU session modification command. By using the existing PDU modification procedure, the CN entity may be efficiently informed of the UE wish/request for performing said switching between the RRC idle and inactive states or from the RRC idle or inactive state to the RRC connected state for the MBS traffic reception.

In one example embodiment of the second aspect, the at least one memory and the computer program code are configured to, with the at least one processor, cause the CN entity to receive, from the UE, each of the second UE request and the third UE request as a mobility registration request, and transmit, to the UE and the RAN node serving the UE, each of the second indication and the third indication as a mobility registration accept message. By using the existing mobility registration procedure, the CN entity may be efficiently informed of the UE wish/request for performing said switching between the RRC idle and inactive states or from the RRC idle or inactive state to the RRC connected state for the MBS traffic reception.

In one example embodiment of the second aspect, the at least one MBS-associated requirement comprises at least one of: a QoS parameter or policy defined by an operator of the wireless communication network or configured by another CN entity responsible for MBS management, an allowed packet error rate for an MBS session, and a maximum delay for the MBS session. By using these MBS-associated requirements, the CN entity may properly decide when it is possible to perform said dynamic switching between the different RRC connection states for the MBS traffic reception.

According to a third aspect, a RAN node in a wireless communication system is provided. The RAN node comprises at least one processor and at least one memory. The at least one memory comprises a computer program code. The at least one memory and the computer program code are configured to, with the at least one processor, cause the RAN node to operate at least as follows. At first, the RAN node is caused to receive, from a UE, a first UE request for switching from an MBS traffic reception in an RRC connected state to the MBS traffic reception in an RRC idle or inactive state. Next, the RAN node is caused to decide that the first UE request is granted or rejected based on at least one MBS-associated requirement. In this configuration, in response to the UE request, the RAN node may allow the UE to dynamically switch from the RRC connected state to the RRC idle or inactive state for the MBS traffic reception. Said dynamical switching may, for example, allow the UE to save its power consumption (e.g., when a battery level is low).

In one example embodiment of the third aspect, the at least one memory and the computer program code are further configured to, with the at least one processor, cause the RAN node to transmit, to the UE, a first indication that the first UE request is granted or rejected. In this case, the RAN node may properly inform the UE of said allowed switching from the RRC connected state to the RRC idle or inactive state for the MBS traffic reception.

In one example embodiment of the third aspect, the at least one memory and the computer program code are configured to, with the at least one processor, cause the RAN node to receive, from the UE, the first UE request by using an RRC signalling, and transmit, to the UE, the first indication by using the RRC signalling. By using the RRC signalling (or RRC messages), the RAN node may be efficiently informed of the UE wish/request for performing said switching to the MBS traffic reception in the RRC idle or inactive state.

In one example embodiment of the third aspect, the at least one memory and the computer program code are configured to, with the at least one processor, cause the RAN node to store the first UE request if the first UE request is granted, and transmit the stored first UE request to a target RAN node if a handover procedure is initiated for the UE. By so doing, it is possible to inform another RAN node about the UE request/wish to perform the MBS traffic reception in the RRC idle or inactive state.

In one example embodiment of the third aspect, the at least one memory and the computer program code are further configured to, with the at least one processor, cause the RAN node to receive, from the UE, a second UE request for switching from the MBS traffic reception in the RRC idle or inactive state to the MBS traffic reception in the RRC connected state, or a third UE request for switching between the MBS traffic reception in the RRC inactive state and the MBS traffic reception in the RRC idle state. In this example embodiment, the at least one memory and the computer program code are further configured to, with the at least one processor, cause the RAN node to decide that the second UE request or the third UE request is granted or rejected based on the at least one MBS-associated requirement, and transmit, to the UE, a second or third indication that the second UE request or the third UE request is granted or rejected. By so doing, the RAN node may allow the UE to dynamically switch between the RRC idle and inactive states or from the RRC idle or inactive state to the RRC connected state for the MBS traffic reception. Said switching between the RRC idle and inactive states for the MBS traffic reception may be performed, for example, when the UE is interested in conserving a battery power, when there is no other active traffic received by the UE other than the MBS service, etc. Said switching from the RRC idle or inactive state to the RRC connected state for the MBS traffic reception may be performed, for example, when the UE wants to achieve a better MBS quality.

In one example embodiment of the third aspect, the at least one memory and the computer program code are configured to, with the at least one processor, cause the RAN node to receive, from the UE, each of the second UE request and the third UE request by using an RRC signalling, and transmit, to the UE, each of the second indication and the third indication by using the RRC signalling. By using the RRC signalling (or RRC messages), the RAN node may be efficiently informed of the UE wish/request for performing said switching between the RRC idle and inactive states or from the RRC idle or inactive state to the RRC connected state for the MBS traffic reception.

In one example embodiment of the third aspect, the at least one memory and the computer program code are configured to, with the at least one processor, cause the RAN node to store the second UE request or the third UE request if the second UE request or the third UE request is granted, and transmit the stored second UE request or the stored third UE request to a target RAN node if a handover procedure is initiated for the UE. By so doing, it is possible to inform another RAN node about the UE request/wish to perform the MBS traffic reception in the RRC idle or inactive state or in the RRC connected state.

In one example embodiment of the third aspect, the at least one MBS-associated requirement comprises at least one of: a QoS parameter or policy defined by an operator of the wireless communication network or configured by an CN entity responsible for MBS management, an allowed packet error rate for an MBS session, and a maximum delay for the MBS session. By using these MBS-associated requirements, the RAN node may properly decide when it is possible to perform said dynamic switching between the different RRC connection states for the MBS traffic reception.

According to a fourth aspect, a UE in a wireless communication network is provided. The UE comprises a means for performing an MBS traffic reception in an RRC connected state (e.g., RRC_CONNECTED state). The UE further comprises a means for transmitting, to a RAN node or a CN entity, a UE request for switching from the MBS traffic reception in the RRC connected state to the MBS traffic reception in an RRC idle or inactive state (i.e., RRC_IDLE or RRC_INACTIVE state, respectively) when a trigger event occurs in the RRC connected state. In this configuration, the UE may request the dynamical switching from the RRC connected state to the RRC idle or inactive state for the MBS traffic reception. Said dynamical switching may, for example, allow the UE to save its power consumption (e.g., when a battery level is low).

According to a fifth aspect, a CN entity in a wireless communication system is provided. The CN entity comprises a means for receiving, from a UE, a UE request for switching from an MBS traffic reception in an RRC connected state to the MBS traffic reception in an RRC idle or inactive state. The CN entity further comprises a means for deciding that the UE request is granted or rejected based on at least one MBS-associated requirement. In this configuration, in response to the UE request, the CN entity may allow the UE to dynamically switch from the RRC connected state to the RRC idle or inactive state for the MBS traffic reception. Said dynamic switching may, for example, allow the UE to save its power consumption (e.g., when a battery level is low).

According to a sixth aspect, a RAN node in a wireless communication system is provided. The RAN node comprises a means for receiving, from a UE, a UE request for switching from an MBS traffic reception in an RRC connected state to the MBS traffic reception in an RRC idle or inactive state. The RAN node further comprises a means for deciding that the UE request is granted or rejected based on at least one MBS-associated requirement. In this configuration, in response to the UE request, the RAN node may allow the UE to dynamically switch from the RRC connected state to the RRC idle or inactive state for the MBS traffic reception. Said dynamical switching may, for example, allow the UE to save its power consumption (e.g., when a battery level is low).

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows a block diagram of a User Equipment (UE) in accordance with one example embodiment;
FIG. 2 shows a flowchart of a method for operating the UE shown in FIG. 1 in accordance with one example embodiment;
FIG. 3 shows a block diagram of a Core Network (CN) entity in accordance with one example embodiment;
FIG. 4 shows a flowchart of a method for operating the CN entity shown in FIG. 3 in accordance with one example embodiment;
FIG. 5 shows a block diagram of a Radio Access Network (RAN) node in accordance with one example embodiment;
FIG. 6 shows a flowchart of a method for operating the RAN node shown in FIG. 5 in accordance with one example embodiment;
FIG. 7 shows an interaction diagram that explains the interaction between a UE, a gNB and different CN entities for the purpose of enabling an MBS traffic reception in a Radio Resource Control (RRC) inactive state in accordance with one example embodiment;
FIG. 8 shows an interaction diagram that explains the interaction between a UE, a gNB and different CN entities for the purpose of disabling the MBS traffic reception in the RRC inactive state in accordance with one example embodiment;
FIG. 9 shows an interaction diagram that explains the interaction between a UE, a gNB and an AMF for the purpose of enabling the MBS traffic reception in an RRC idle state in accordance with one example embodiment;
FIG. 10 shows an interaction diagram that explains the interaction between a UE, a gNB and different CN entities for the purpose of enabling the MBS traffic reception in the RRC inactive state in accordance with one example embodiment;
FIG. 11 shows an interaction diagram that explains the interaction between a UE, a gNB and an AMF for the purpose of enabling the MBS traffic reception in the RRC idle or inactive state in accordance with one example embodiment;
FIG. 12 shows an interaction diagram that explains the interaction between a UE, a gNB and different CN entities for the purpose of managing UE requests at session activation in accordance with one example embodiment;
FIG. 13 shows an interaction diagram that explains the interaction between a UE, a gNB and different CN entities for the purpose of managing UE requests at session activation in accordance with another example embodiment;
FIG. 14 shows an interaction diagram that explains the interaction between a UE, two gNBs and different CN entities for the purpose of transferring UE requests in case of different handover scenarios in accordance with one example embodiment; and
FIG. 15 shows an interaction diagram that explains the interaction between a UE, a gNB and different CN entities for the purpose of controlling UE requests or preferences in accordance with one example embodiment.

### DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatuses and methods disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

According to the example embodiments disclosed herein, a User Equipment (UE) may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a laptop computer, a tablet computer, a gaming device, a netbook, a smartbook, an ultrabook, a medical mobile device or equipment, a biometric sensor, a customer premises equipment (CPE) (e.g., a wireless router, switch, etc.), a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (loT) device, an Industrial loT (IIoT) device, a machine-type communication (MTC) device, a group of Massive loT (MIoT) or Massive MTC (mMTC) devices/sensors, or any other suitable mobile device configured to support wireless communications. In some embodiments, the UE may refer to at least two collocated and inter-connected UEs thus defined.

As used in the example embodiments disclosed herein, a Radio Access Network (RAN) node may refer to a fixed point of communication for a UE in a particular wireless communication network. The RAN node is used to connect the UE to a Data Network (DN) through a Core Network (CN) and may be referred to as a base transceiver station (BTS) in terms of the 2G communication technology, a NodeB in terms of the 3G communication technology, an evolved NodeB (eNodeB) in terms of the 4G communication technology, and a gNB in terms of the 5G New Radio (NR) communication technology. The RAN node may serve different cells, such as a macrocell, a microcell, a picocell, a femtocell, and/or other types of cells. The macrocell may cover a relatively large geographic area (for example, at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (for example, a home). Correspondingly, the network node serving the macrocell may be referred to as a macro node, the network node serving the microcell may be referred to as a micro node, and so on.

It should be noted that a CN may refer to a network intended for connecting different RAN nodes by providing proper interfaces therebetween. The CN may also provide a gateway to other networks, for example, the DN. The CN may comprise different network functions or entities, such as an Access and Mobility Management Function (AMF), a Session Management Function (SMF), etc. The AMF supports termination of Non-Access Stratum (NAS) signalling, NAS ciphering and integrity protection, registration management, connection management, mobility management, access authentication and authorization, security context management. The SMF supports session management (session establishment, modification, release), UE IP address allocation and management, Dynamic Host Configuration Protocol (DHCP) functions, termination of NAS signalling related to the session management, downlink (DL) data notification, traffic steering configuration for the UPF for proper traffic routing.

According to the example embodiments disclosed herein, a wireless communication network, in which a UE, a RAN node and a CN entity communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

As used in the example embodiments disclosed herein, different Radio Resource Control (RRC) connection states are used in their ordinary meaning defined, for example, in accordance with the 5G NR standard. More specifically, an RRC connected state (i.e., RRC_CONNECTED) may refer to a state where a UE is connected to a RAN and a CN via a RAN node and is able to receive and transmit a data traffic with no restriction of data size, and an RRC inactive state (i.e., RRC_INACTIVE) may refer to a state where the UE maintains information relating to its preceding connection to the RAN via the RAN node, but in a suspended fashion, in which either no data traffic is temporarily available to the UE or data traffic is available with some restriction of data size. There is also an RRC idle state (i.e., RRC_IDLE), in which the UE has no connection with the RAN nor the CN, thereby significantly reducing power consumption similarly to the RRC_INACTIVE state. It should be noted that the present disclosure is not limited to the above-defined RRC states, and any other similar RAN connection states, which are already existing or may be invented in future, may be used instead of the RRC states.

The example embodiments disclosed herein provide a technical solution that allows a UE to dynamically switch between the above-indicated different RRC connection states for an MBS traffic reception. More specifically, when a first trigger event occurs in the RRC connected state, the UE is configured to request a RAN node or a CN entity to switch from the MBS traffic reception in the RRC connected state to the MBS traffic reception in the RRC idle or inactive state. When a second trigger event occurs in the RRC idle or inactive state, the UE is configured to request the RAN node or the CN entity to switch from the MBS traffic reception in the RRC idle or inactive state to the MBS traffic reception in the RRC connected state. The RAN node or CN entity may decide on enabling and disabling the MBS traffic reception in the RRC idle or inactive state based on at least one MBS-associated requirement, for example, defined by a communication service operator. In some embodiments, it is also possible for the UE to request switching between the RRC idle and inactive states for the MBS traffic reception.

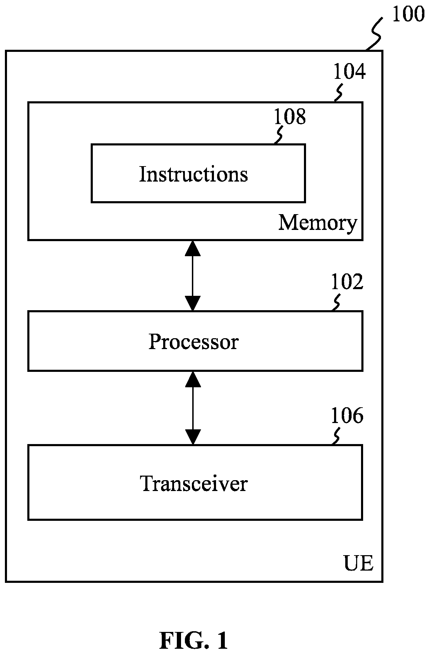

FIG. 1 shows a block diagram of a UE 100 in accordance with one example embodiment. The UE 100 is intended to communicate with a RAN node and a CN entity in any of the above-described wireless communication networks. As shown in FIG. 1, the UE 100 comprises a processor 102, a memory 104, and a transceiver 106. The memory 104 stores processor-executable instructions 108 which, when executed by the processor 102, cause the processor 102 to perform the aspects of the present disclosure, as will be described below in more detail. It should be noted that the number, arrangement, and interconnection of the constructive elements constituting the UE 100, which are shown in FIG. 1, are not intended to be any limitation of the present disclosure, but merely used to provide a general idea of how the constructive elements may be implemented within the UE 100. For example, the processor 102 may be replaced with several processors, as well as the memory 104 may be replaced with several removable and/or fixed storage devices, depending on particular applications. Furthermore, in some embodiments, the transceiver 106 may be implemented as two individual devices, with one for a receiving operation and another for a transmitting operation. Irrespective of its implementation, the transceiver 106 is intended to be capable of performing different operations required to perform the data reception and transmission, such, for example, as signal modulation/demodulation, encoding/decoding, etc. In other embodiments, the transceiver 106 may be part of the processor 102 itself.

The processor 102 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should also be noted that the processor 102 may be implemented as any combination of one or more of the aforesaid. As an example, the processor 102 may be a combination of two or more microprocessors.

The memory 104 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 108 stored in the memory 104 may be configured as a computer-executable program code which causes the processor 102 to perform the aspects of the present disclosure. The computer-executable program code for carrying out operations or steps for the aspects of the present disclosure may be written in any combination of one or more programming languages, such as Java, C++, or the like. In some examples, the computer-executable program code may be in the form of a high-level language or in a pre-compiled form and be generated by an interpreter (also pre-stored in the memory 104) on the fly.

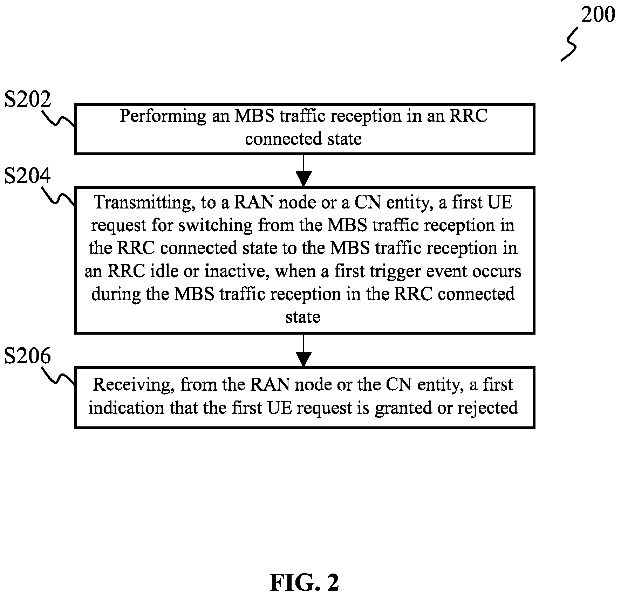

FIG. 2 shows a flowchart of a method 200 for operating the UE 100 in accordance with one example embodiment. The method 200 starts with a step S202, in which the processor 102 performs (e.g., by means of the transceiver 106) an MBS traffic reception in an RRC connected state. Then, the method 200 proceeds to a step S204, in which the processor 102 transmits (e.g., by means of the transceiver 106), to a RAN node (e.g., gNB) or a CN entity (e.g., an AMF), a first UE request for switching from the MBS traffic reception in the RRC connected state to the MBS traffic reception in an RRC idle or inactive state. The processor 102 transmits the first UE request when a first trigger event occurs in the RRC connected state. The first trigger event may include one or more of the following events: a battery level of the UE goes below a threshold, a priority degree of an MBS traffic priority changes from a high priority value to a low priority value, and a priority degree of a packet error rate of the MBS traffic reception changes from a high priority value to a low priority value. The latter corresponds to a reliability degree of the MBS traffic reception; a higher packet error rate or, in other words, a lower reliability of the MBS traffic reception may be acceptable (or, in other words, less important) for the UE in some scenarios. Next, the method 200 goes on to an optional step S206, in which the processor 102 receives (e.g., by means of the transceiver 106), from the RAN node or the CN entity, a first indication that the first UE request is granted or rejected, i.e., whether the MBS traffic reception in the RRC idle or inactive state is allowed or not. In some embodiments, instead of sending such an indication, the CN entity or the RAN node may immediately initiate said switching from the RRC connected state to the RRC idle or inactive state for the MBS traffic reception. If the CN entity is an SMF responsible for granting or rejecting the first UE request, each of the steps S204 and S206 (if the latter is required) may be performed by using the existing PDU session modification procedure, in which the first UE request may be transmitted by the processor 102 as (a part of) a PDU session modification request and the first indication may be received by the processor 102 as (a part of) a PDU session modification command. If the CN entity is an AMF responsible for granting or rejecting the first UE request, each of the steps S204 and S206 (if the latter is required) may be performed by using the existing mobility registration procedure, in which the first UE request may be transmitted by the processor 102 as (a part of) a mobility registration request and the first indication may be received by the processor 102 as (a part of) a mobility registration accept. If it is the RAN node which is responsible for granting or rejecting the first UE request, each of the steps S204 and S206 (if the latter is required) may be performed by using an RRC signalling, i.e., both the first UE request and the first indication may be communicated as (parts of) RRC messages.

In one embodiment, the method 200 may comprise an additional step (after the step S204 or the step S206 (if the latter is required)), in which the processor 102 transmits, to the RAN node or the CN entity, a second UE request for switching the MBS traffic reception in the RRC idle or inactive state to the MBS traffic reception in the RRC connected state. More specifically, the processor 102 transmits the second UE request when a second trigger event occurs in the RRC idle or inactive state. The second trigger event may include one or more of the following events: the battery level of the UE goes above the threshold (i.e., the battery level is high enough), the priority degree of the MBS traffic changes from the low priority value to the high priority value, and the priority degree of the packet error rate changes from the low priority value to the high priority value. The latter means that the packet error rate becomes important again for the UE 100 (i.e., the low-reliability MBS traffic reception is no longer acceptable for the UE 100). In this embodiment, upon transmitting the second UE request, the processor 102 is further configured to receive, from the RAN node or the CN entity, a second indication that the second UE request is granted or rejected, i.e., whether the MBS traffic reception in the RRC idle or inactive state is disabled or not. In response to the second indication, the processor 102 is further configured to resume the MBS traffic reception in the RRC connected state, if required (i.e., if there is some MBS traffic to be received). Again, the second UE request and the second indication may be transmitted and received, respectively, by using the existing PDU modification procedure or mobility registration procedure if the CN entity is in charge or an RRC signalling if the RAN node is in charge.

In one embodiment, the method 200 may comprise an additional step (after the step S204 or the step S206 (if the latter is required)), in which the processor 102 transmits, to the RAN node or the CN entity, a third UE request for switching from the MBS traffic reception in the RRC inactive state to the MBS traffic reception in the RRC idle state, or vice versa. More specifically, the processor 102 transmits the third UE request when a third trigger event occurs in the RRC idle or inactive state. The third trigger event may include one or more of the following events: the battery level of the UE gradually goes down and reaches a first threshold or goes up and reaches a second threshold, and there is an increase or decrease in the priority degree of the packet error rate of the MBS traffic reception. For example, if the battery level continues dropping towards the first threshold, it may be reasonable to request the RAN node or the CN entity to perform the switching from the MBS traffic reception in the RRC inactive state to the MBS traffic reception in the RRC idle state. In the reverse situation, i.e., when the battery level incrementally increases towards the second threshold, it may be reasonable to request the RAN node or the CN entity to perform the switching from the MBS traffic reception in the RRC idle state to the MBS traffic reception in the RRC inactive state (when the battery level exceeds the second threshold, then the processor 102 may send the second request to the RAN node or the CN entity). In this embodiment, upon transmitting the third UE request, the processor 102 receives, from the RAN node or the CN entity, a third indication that the third UE request is granted or rejected. Again, the third UE request and the third indication may be transmitted and received, respectively, by using the existing PDU modification procedure or mobility registration procedure if the CN entity is in charge or an RRC signalling if the RAN node is in charge.

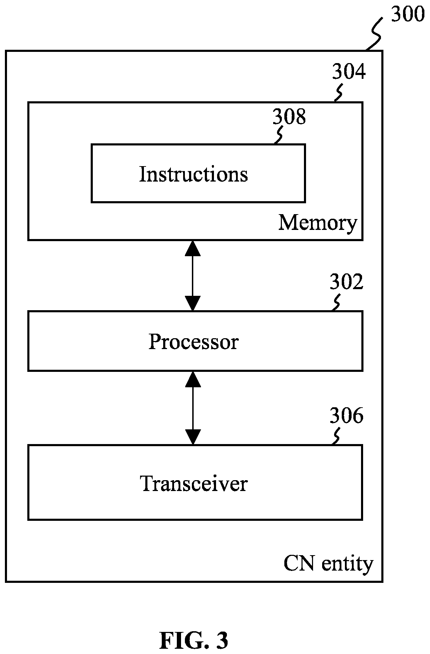

FIG. 3 shows a block diagram of a CN entity 300 in accordance with one example embodiment. The CN entity 300 may be implemented, for example, as an AMF or SMF and is intended to communicate with the UE 100 in any of the above-described wireless communication networks. As shown in FIG. 3, the CN entity 300 comprises a processor 302, a memory 304, and a transceiver 306. The memory 304 stores processor-executable instructions 308 which, when executed by the processor 302, cause the processor 302 to implement the aspects of the present disclosure, as will be described below in more detail. It should be again noted that the number, arrangement, and interconnection of the constructive elements constituting the CN entity 300, which are shown in FIG. 3, are not intended to be any limitation of the present disclosure, but merely used to provide a general idea of how the constructive elements may be implemented within the CN entity 300. In general, the processor 302, the memory 304, the transceiver 306, and the processor-executable instructions 308 may be implemented in the same or similar manner as the processor 102, the memory 104, the transceiver 106, and the processor-executable instructions 108, respectively.

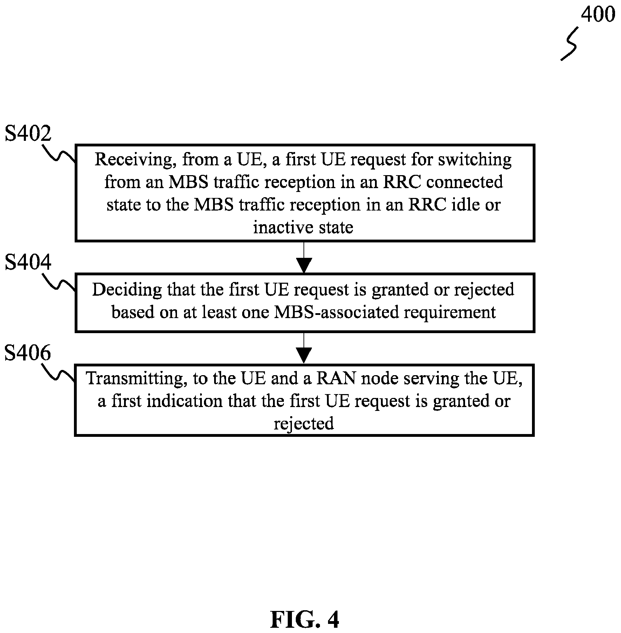

FIG. 4 shows a flowchart of a method 400 for operating the CN entity 300 in accordance with one example embodiment. The method 400 starts with a step S402, in which the processor 302 receives (e.g., by means of the transceiver 306), from the processor 102 of the UE 100, the first UE request for switching from the MBS traffic reception in the RRC connected state to the MBS traffic reception in the RRC idle or inactive state. As noted above, the first UE request is transmitted by the processor 102 when the first trigger event occurs in the UE 100 in the RRC connected state. Then, the method 400 proceeds to a step S404, in which the processor 302 decides that the first UE request is granted or rejected based on one or more MBS-associated requirements. The MBS-associated requirement(s) may include, but not limited to, a Quality-of-Service (QoS) parameter or policy defined by an operator of the wireless communication network or configured by another CN entity responsible for MBS management (e.g., Multicast Broadcast (MB) SMF (MB-SMF)), an allowed packet error rate for an MBS session, a maximum delay for the MBS session, or any combination thereof. It should also be noted that if, for example, the CN entity 300 is an AMF, the MBS-associated requirement(s) may be provided to the AMF from another CN entity, such as an SMF or MB-SMF, either in advance (i.e., before the method 400 starts) or during the method 400. The method 400 ends up with an optional step S406, in which the processor 302 transmits (e.g., by means of the transceiver 306), to the processor 102 of the UE 100 and a RAN node serving the UE 100, the first indication that the first UE request is granted or rejected. As noted above, instead of performing the step S406, the CN entity 300 may immediately (after the step S404) initiate said switching from the RRC connected state to the RRC idle or inactive state for the MBS traffic reception. Each of the steps S402 and S406 (if the latter is required) may be performed by using the existing PDU modification procedure or mobility registration procedure. In the former case the first UE request may be received by the processor 302 as (a part of) a PDU session modification request and the first indication may be transmitted by the processor 302 as (a part of) a PDU session modification command. In the latter case, the first UE request may be received by the processor 302 as (a part of) a mobility registration request and the first indication may be transmitted by the processor 302 as (a part of) a mobility registration accept message.

In one embodiment, the method 400 may comprise an additional step (after the step S404 or the step S406 (if the latter is required)), in which the processor 302 receives, from the processor 102 of the UE 100, the second UE request for switching from the MBS traffic reception in the RRC idle or inactive state to the MBS traffic reception in the RRC connected state, i.e., disabling the MBS traffic reception in the RRC idle or inactive state. As noted above, the second UE request is transmitted when the second trigger event occurs in the UE 100 in the RRC idle or inactive state. In this embodiment, upon receiving the second UE request, the processor 302 is further configured to decide that the second UE request is granted or rejected based on the MBS-associated requirement(s) and transmit, to the processor 102 of the UE 100 and the RAN node serving the UE 100, the second indication that the second UE request is granted or rejected.

In one embodiment, the method 400 may comprise an additional step (after the step S404 or the step S406 (if the latter is required)), in which the processor 302 receives, from the processor 102 of the UE 100, the third UE request for switching from the MBS traffic reception in the RRC inactive state to the MBS traffic reception in the RRC idle state, or vice versa. As noted above, the third UE request is transmitted when the third trigger event occurs in the UE 100 in the RRC idle or inactive state. In this embodiment, upon receiving the third UE request, the processor 302 decides that the third UE request is granted or rejected based on the MBS-associated requirement(s) and transmits, to the processor 102 of the UE 100 and the RAN node serving the UE 100, the third indication that the third UE request is granted or rejected.

In the above embodiments relating to the CN entity 300, the second and third UE requests and the second and third indications may also be received and transmitted, respectively, by using the existing PDU modification procedure or mobility registration procedure.

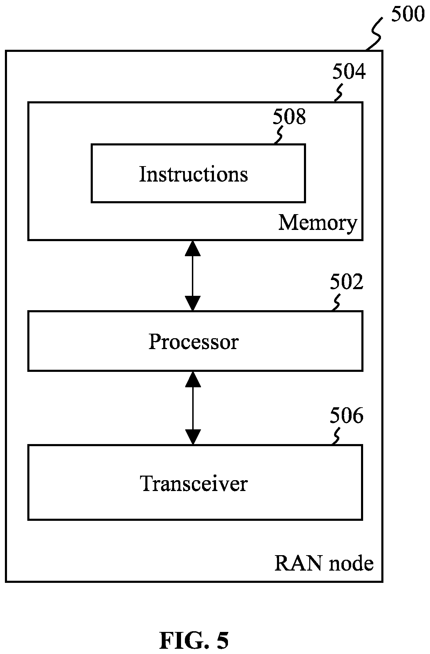

FIG. 5 shows a block diagram of a RAN node 500 in accordance with one example embodiment. The RAN node 500 may be implemented, for example, as a gNB and is intended to communicate with the UE 100 in any of the above-described wireless communication networks. As shown in FIG. 5, the RAN node 500 comprises a processor 502, a memory 504, and a transceiver 506. The memory 504 stores processor-executable instructions 508 which, when executed by the processor 502, cause the processor 502 to implement the aspects of the present disclosure, as will be described below in more detail. It should be again noted that the number, arrangement, and interconnection of the constructive elements constituting the RAN node 500, which are shown in FIG. 5, are not intended to be any limitation of the present disclosure, but merely used to provide a general idea of how the constructive elements may be implemented within the RAN node 500. In general, the processor 502, the memory 504, the transceiver 506, and the processor-executable instructions 508 may be implemented in the same or similar manner as the processor 102, the memory 104, the transceiver 106, and the processor-executable instructions 108, respectively.

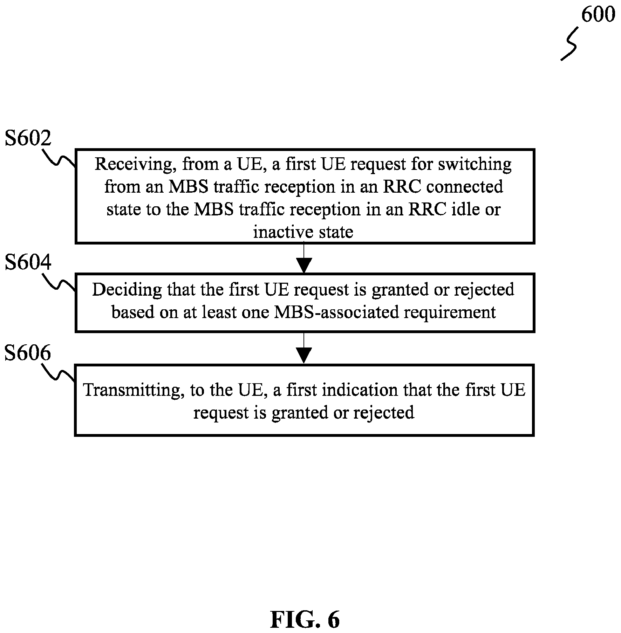

FIG. 6 shows a flowchart of a method 600 for operating the RAN node 500 in accordance with one example embodiment. The method 600 starts with a step S602, in which the processor 502 receives (e.g., by means of the transceiver 506), from the processor 102 of the UE 100, the first UE request for switching from the MBS traffic reception in the RRC connected state to the MBS traffic reception in the RRC idle or inactive state. As noted above, the first UE request is transmitted by the processor 102 when the first trigger event occurs in the UE 100 in the RRC connected state. Then, the method 600 proceeds to a step S604, in which the processor 502 decides that the first UE request is granted or rejected based on one or more MBS-associated requirements. Again, the MBS-associated requirement(s) may include, but not limited to, a QoS parameter or policy defined by an operator of the wireless communication network or configured a CN entity responsible for MBS management (e.g., an SMF or MB-SMF), an allowed packet error rate for an MBS session, a maximum delay for the MBS session, or any combination thereof. It should also be noted that the MBS-associated requirement(s) may be provided to the RAN node 500 from a CN entity, such as an SMF or MB-SMF, either in advance (i.e., before the method 600 starts) or during the method 600. The method 600 ends up with an optional step S606, in which the processor 502 transmits (e.g., by means of the transceiver 506), to the processor 102 of the UE 100, the first indication that the first UE request is granted or rejected. As noted above, instead of performing the step S606, the RAN node 600 may immediately (after the step S604) initiate said switching from the RRC connected state to the RRC idle or inactive state for the MBS traffic reception. Each of the steps S602 and S606 (if the latter is required) may be performed by using an RRC signalling.

In one embodiment, the method 600 may comprise an additional step (after the step S604 or the step S606 (if the latter is required)), in which the processor 502 receives, from the processor 102 of the UE 100, the second UE request for switching from the MBS traffic reception in the RRC idle or inactive state to the MBS traffic reception in the RRC connected state. As noted above, the second UE request is transmitted when the second trigger event occurs in the UE 100 in the RRC idle or inactive state. In this embodiment, upon receiving the second UE request, the processor 502 is further configured to decide that the second UE request is granted or rejected based on the MBS-associated requirement(s) and transmit, to the processor 102 of the UE 100, the second indication that the second UE request is granted or rejected.

In one embodiment, the method 600 may comprise an additional step (after the step S604 or the step S606 (if the latter is required)), in which the processor 502 receives, from the processor 102 of the UE 100, the third UE request for switching from the MBS traffic reception in the RRC inactive state to the MBS traffic reception in the RRC idle state, or vice versa. As noted above, the third UE request is transmitted when the third trigger event occurs in the UE 100 in the RRC idle or inactive state. In this embodiment, upon receiving the third UE request, the processor 502 decides that the third UE request is granted or rejected based on the MBS-associated requirement(s) and transmits, to the processor 102 of the UE 100, the third indication that the third UE request is granted or rejected.

In the above embodiments relating to the RAN node 500, the second and third UE requests and the second and third indications may be received and transmitted, respectively, by using an RRC signalling as well.

In one embodiment, the method 600 may comprise additional steps (after the step S604 or the step S606 (if the latter is required)), in which the processor 502 stores the first UE request if the first UE request is granted and transmit the stored first UE request to a target RAN node if a handover procedure is initiated for the UE 100. The same steps may be performed in respect of the second and third UE requests, if any.

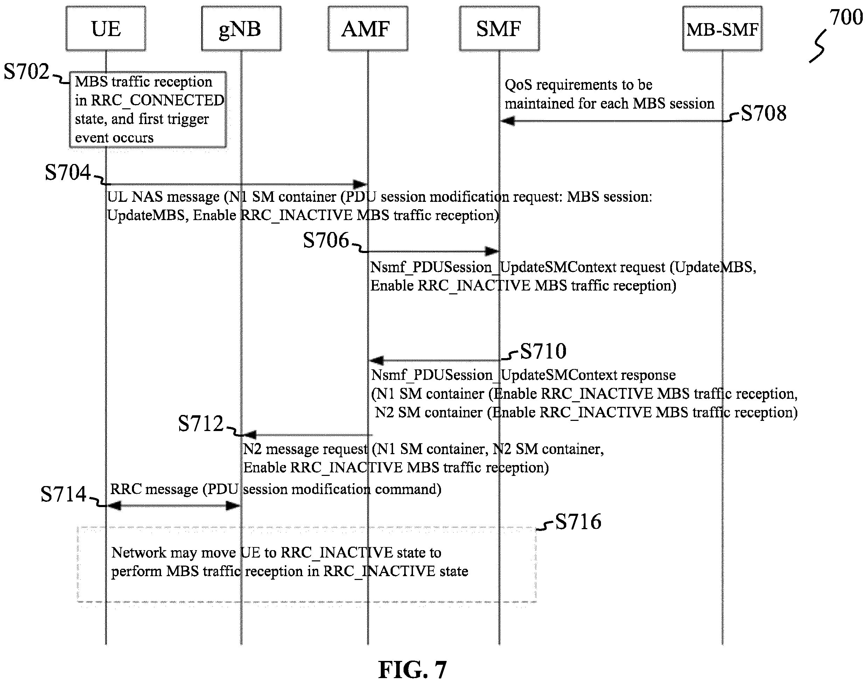

FIG. 7 shows an interaction diagram 700 that explains the interaction between a UE, a gNB and different CN entities for the purpose of enabling the MBS traffic reception in the RRC inactive state in accordance with one example embodiment. In the interaction diagram 700, it is assumed that the UE is served by the gNB and implemented as the UE 100. The CN entities are represented by an AMF, an SMF, and an MB-SMF. It should be noted that the MB-SMF is responsible for MBS session management (including QoS control). It is further assumed that the SMF is implemented as the CN entity 300.

The interaction diagram 700 starts with a step S702, in which the UE performs an MBS traffic reception in RRC_CONNECTED state and decides to enable (i.e., switch to) the MBS traffic reception in RRC_INACTIVE state in response to the occurrence of the first trigger event (e.g., due to a low battery level on the UE side).

Then, the interaction diagram 700 proceeds to a step S704, in which the UE initiates the PDU Session Modification procedure (under the 5G Non-Access Stratum (NAS) protocol) by sending an uplink (UL) NAS message to the AMF. The UL NAS message comprises a PDU session modification request for a PDU session that is associated with the MBS session (i.e., the MBS traffic reception). The UE may include, in the UL NAS message, an MBS container (e.g., N1 SM container) with some new flags "UpdateMBS" and "Enable RRC_INACTIVE MBS traffic reception" which indicate that the UE wants to enable the MBS traffic reception in RRC_INACTIVE state. If the UE joined MBS sessions that are associated with more than one PDU session, then the UE may initiate the UL NAS message (or, consequently, the PDU Session Modification request) for each PDU session.

Next, the interaction diagram 700 goes on to a step S706, in which the AMF forwards the UL NAS message from the UE to the SMF. The SMF determines whether to accept or reject the PDU session modification request (i.e., the UE request to enable the MBS traffic reception in RRC_INACTIVE state) based on one or more of the following MBS-associated requirements: QoS, and an operator policy that controls the RAN connection state during the MBS traffic reception. The MBS-associated requirement(s) is(are) provided to the SMF from the MB-SMF in a step S708; this step may be performed either in advance, i.e., before the step S702, or during the interaction diagram 700 (e.g., the SMF may request the MB-SMF to provide the MBS-associated requirement(s) upon receiving the UL NAS message from the AMF in the step S706). The SMF takes the MBS-associated requirement(s) into consideration to decide on granting the UE request.

In a next step S710, it is assumed that the SMF sends, to the AMF, an indication/confirmation that the UE request is granted. In turn, the AMF forwards the indication to the gNB in a step S712, whereupon the gNB becomes aware about the UE request and may now start any needed procedure for providing the MBS traffic reception in RRC_INACTIVE state. Again, if the UE joined MBS sessions associated with more than one PDU session, the gNB should receive an N2 SM container for all PDU sessions before it decides on releasing the UE to RRC_INACTIVE state.

After that, the interaction diagram 700 proceeds to a step S714, in which the gNB replies with a PDU session modification command back to the UE, indicating the ACK/confirmation to enable the MBS traffic reception in RRC_INACTIVE state.

It should be noted that the SMF may be configured to send the above indication/confirmation directly to the gNB and the UE, if required and depending on particular applications.

The interaction diagram 700 ends up with a step S716, in which the UE may move to RRC-INACTIVE state, since the MBS traffic reception may now be performed in RRC_INACTIVE state.

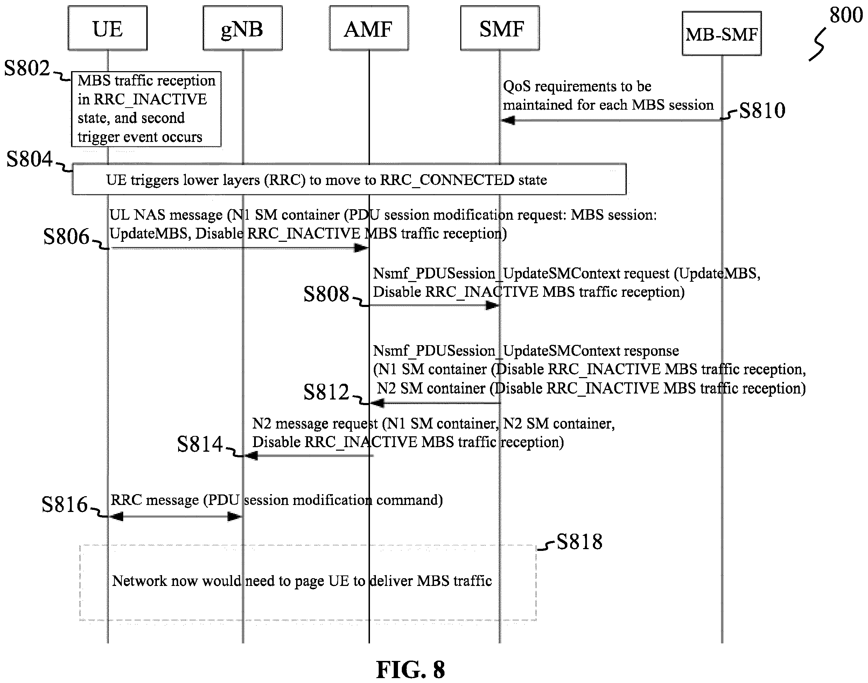

FIG. 8 shows an interaction diagram 800 that explains the interaction between a UE, a gNB and different CN entities for the purpose of disabling the MBS traffic reception in the RRC inactive state in accordance with one example embodiment. In the interaction diagram 800, it is assumed that the UE is served by the gNB and implemented as the UE 100. The CN entities are represented by an AMF, an SMF, and an MB-SMF again. Similarly, it is assumed that the SMF is implemented as the CN entity 300.

The interaction diagram 800 starts with a step S802, in which the UE performs an MBS traffic reception in RRC_INACTIVE state and decides to disable the MBS traffic reception in the RRC_INACTIVE state, i.e., returns back to the MBS traffic reception in RRC_CONNECTED state, in response to the occurrence of the second trigger event (e.g., due to caring more about the MBS quality, and/or due to a good battery level on the UE side).

Then, the interaction diagram 800 proceeds to a step S804, in which the UE triggers lower layers (UE-RRC) to move to RRC_CONNECTED state (i.e., to resume the full connection) to be able to send an UL NAS message to the AMF.

Next, the interaction diagram 800 goes on to a step S806, in which the UE being in RRC_CONNECTED state initiates a PDU session modification procedure (under the 5G NAS protocol) by sending the UL NAS message to the AMF. The UL NAS message comprises a PDU session modification request for a PDU session that is associated with the MBS session (i.e., the MBS traffic reception). The UE may include, in the UL NAS message, an MBS container (e.g., N1 SM container) with some new flags "UpdateMBS" and "Disable RRC_INACTIVE MBS traffic reception" which indicate that the UE wants to disable the MBS traffic reception in RRC_INACTIVE state.

In a next step S808, the AMF forwards the UL NAS message to the SMF. The SMF determines whether to accept or reject the PDU session modification request (i.e., the UE request to disable the MBS traffic reception in RRC_INACTIVE state) based on the same MBS-associated requirement(s) as the one(s) discussed above with reference to the interaction diagram 700. The MBS-associated requirement(s) is(are) provided to the SMF from the MB-SMF in a step S810; this step may be performed either in advance, i.e., before the step S802, or during the interaction diagram 800 (e.g., the SMF may request the MB-SMF to provide the MBS-associated requirement(s) upon receiving the UL NAS message from the AMF in the step S808).

After that, the interaction diagram 800 goes on to a step S812, in which the SMF sends, to the AMF, an indication/confirmation that the UE request is granted. In turn, the AMF forwards the indication to the gNB in a step S814, whereupon the gNB becomes aware about the UE request and may now start any needed procedure for disabling the MBS traffic reception in RRC_INACTIVE state. The gNB may also store a UE preference for receiving the MBS traffic in RRC_CONNECTED state.

Further, the interaction diagram 800 proceed to a step S816, in which the gNB replies with a PDU session modification command back to the UE, indicating the ACK/confirmation to disable the MBS traffic reception in RRC_INACTIVE state. Now the MBS traffic may be received at the UE in RRC_CONNECTED state. If the UE joined multiple MBS sessions, then the gNB should not release the UE to RRC_INACTIVE state when it receives at least one indication of "Disable the MBS traffic reception in RRC_INACTIVE state". The gNB may store the UE preference for receiving the MBS traffic in RRC_CONNECTED state.

The interaction diagram 800 ends up with a step S818, in which, if the UE goes to RRC_IDLE state due to no activity, and there is some MBS traffic to be sent to the UE, the gNB will need to page the UE to move the UE to RRC_CONNECTED state to be able to send the MBS traffic thereto.

It should be noted that the interaction diagrams 700 and 800 may be adapted for enabling and disabling the MBS traffic reception in RRC_IDLE state, respectively. More specifically, the flags used in the interaction diagram 700 may be changed to indicate "Enable RRC_IDLE MBS traffic reception", and the step S716 may be changed to indicate that the network may release the RRC connection to move the UE to RRC_IDLE state to receive the MBS traffic in that state. As for the interaction diagram 800, the flags used therein may be changed to indicate "Disable RRC_IDLE MBS traffic reception".

Furthermore, the interaction diagrams 700 and 800 may be adapted for switching from the MBS traffic reception in RRC_INACTIVE state to the MBS traffic reception in RRC_IDLE state, or vice versa. For this purpose, it is required to properly change the exchanged flags used in these interaction diagrams.

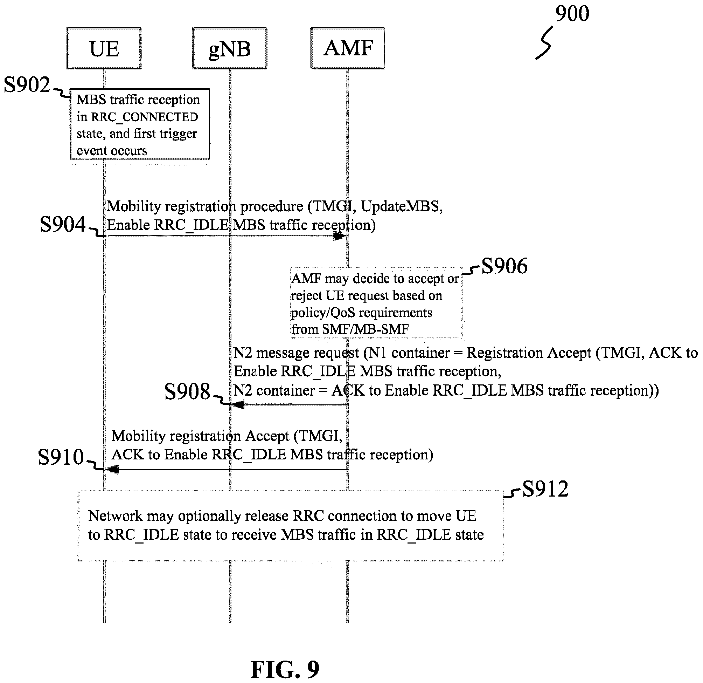

FIG. 9 shows an interaction diagram 900 that explains the interaction between a UE, a gNB and an AMF for the purpose of enabling the MBS traffic reception in the RRC idle state in accordance with one example embodiment. In the interaction diagram 900, it is assumed that the UE is served by the gNB and implemented as the UE 100, and the AMF is implemented as the CN node 300. Furthermore, unlike the interaction diagrams 700 and 800, the interaction diagram 900 relies on using the existing mobility registration procedure to enable the MBS traffic reception in RRC_IDLE state.

The interaction diagram 900 starts with a step S902, in which the UE performs an MBS traffic reception in RRC_CONNECTED state and decides to enable (i.e., switch to) the MBS traffic reception in the RRC_IDLE state in response to the occurrence of the first trigger event (e.g., due to a low battery level on the UE side).

Then, the interaction diagram 900 proceeds to a step S904, in which the UE sends a request for enabling the MBS traffic reception in RRC_IDLE state to the AMF by using the mobility registration procedure. More specifically, the UE may include this request as (a part of) an identity of MBS session (e.g. a Temporary Mobile Group Identifier (TMGI)) with the addition of new flags "UpdateMBS" and "Enable RRC_IDLE MBS traffic reception". It should be noted that the TMGI is optional, i.e., it may not be needed to be included in the UE request; in other embodiments, any mobility registration request may be used for this purpose.

Next, the interaction diagram 900 goes on to a step S906, in which the AMF decides to accept or reject the UE request for enabling the MBS traffic reception in RRC_IDLE state. To do this, the AMF may consider different MBS-associated requirements, such, for example, as operator policy and/or QoS requirements, and/or any other available requirements/criteria. For example, the AMF may obtain the MBS-associated requirement(s) from an SMF or an MB-SMF. Alternatively, the AMF may forward the UE request to the SMF which, in turn, decides on the accepting or rejecting the UE request based on the MBS-associated requirement(s) and provides the AMF with its decision.

Further, the interaction diagram 900 proceeds to a step S908, in which the AMF is assumed to accept the UE request and delivers a corresponding indication/confirmation to the gNB, thereby making the gNB aware about the UE request. In all cases, the AMF replies to the UE with a mobile registration accept in a next step S910, which indicates the confirmation of the UE request.

The interaction diagram 900 ends up with an optional step S912, in which the gNB may release the RRC connection to move the UE to RRC_IDLE state in order for the UE to be able to receive the MBS traffic in that state.

It should be noted that the interaction diagram 900 may be adapted for disabling the MBS traffic reception in the RRC idle state, as well as for enabling and disabling the MBS traffic reception in the RRC inactive state. For example, the flags used in the interaction diagram 900 may be properly changed to indicate "Disable RRC_IDLE MBS traffic reception", "Enable RRC_INACTIVE MBS traffic reception", or "Disable RRC_IDLE MBS traffic reception", depending on particular applications.

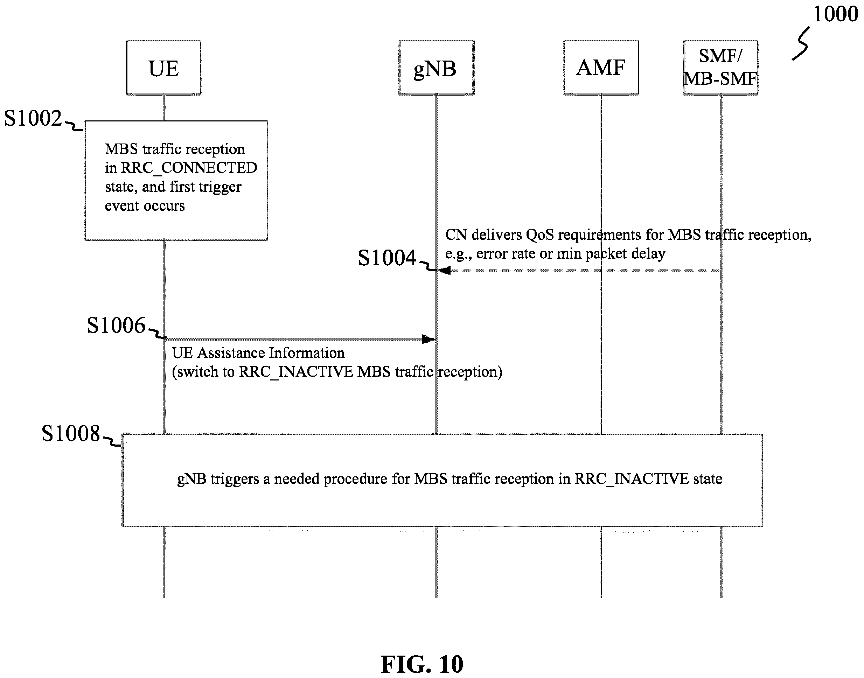

FIG. 10 shows an interaction diagram 1000 that explains the interaction between a UE, a gNB and different CN entities for the purpose of enabling the MBS traffic reception in the RRC inactive state in accordance with one example embodiment. In the interaction diagram 1000, it is assumed that the UE is served by the gNB and implemented as the UE 100, and the gNB is implemented as the RAN node 500. The CN entities are represented by an AMF and an SMF or an MB-SMF.

The interaction diagram 1000 starts with a step S1002, in which the UE performs an MBS traffic reception in RRC_CONNECTED state and decides to enable (i.e., switch to) the MBS traffic reception in RRC_INACTIVE state in response to the occurrence of the first trigger event (e.g., due to a low battery level on the UE side).

Then, the interaction diagram 1000 proceeds to a step S1004, in which the gNB receives one or more QoS requirements from a CN (e.g., the SMF or the MB-SMF) when an MBS session context is created. The QoS requirements may include, for example, a maximum allowed error rate for the MBS session (e.g., for public safety sessions) and/or a minimum packet delay. The gNB is configured to use these QoS requirements to determine whether to release the RRC connection to move the UE to RRC_INACTIVE state in order for the UE to perform the MBS traffic reception in that state.

Next, the interaction diagram 1000 goes on to a step S1006, in which the UE triggers an RRC message "UE Assistance Information" to the gNB, where a new flag is introduced that indicates a UE request/wish to "Switch to RRC_INACTIVE MBS traffic reception".

The interaction diagram 1000 ends up with a step S1008, in which, upon receiving the UE request from the UE and if the QoS requirement(s) is(are) met, the gNB starts the procedure for the MBS multicast reception in RRC_INACTIVE state.

It should be noted that the same mechanism as explained above with reference to FIG. 10 may be used to: disable the MBS traffic reception in RRC_INACTIVE state, enable the MBS traffic reception in RRC_IDLE state, and disable the MBS traffic reception in RRC_IDLE state.

Alternatively, the current UE Assistance Information may indicate that the UE expects "not to send or receive any more data in the near future", for which reason the UE does not consider MBS data. That is, when the gNB receives a request to transit out of RRC_CONNECTED state via the UE Assistance Information when the RRC_CONNECTED state is known to contain MBS traffic reception, the corresponding MBS traffic is moved to RRC_IDLE/INACTIVE state. In other words, when the MBS traffic reception in RRC_CONNECTED state is desired from the UE viewpoint, no UE Assistance Information indicating the UE preference to move to RRC_IDLE/INACTIVE state is signalled, even though the UE expects not to send or receive any more MBS data in the near future as long as the MBS traffic reception is desired in RRC_CONNECTED state.

A finer control may also be provided when the UE signals one or more MBS session identities (e.g., TMGIs) of the MBS traffic reception which it wants to keep in RRC_IDLE/INACTIVE state (or inversely, the TMGI(s) of the MBS traffic reception which it does not want to keep when moving to RRC_IDLE/INACTIVE state). This allows the UE to selectively drop MBSs when moving to RRC_IDLE/INACTIVE state.

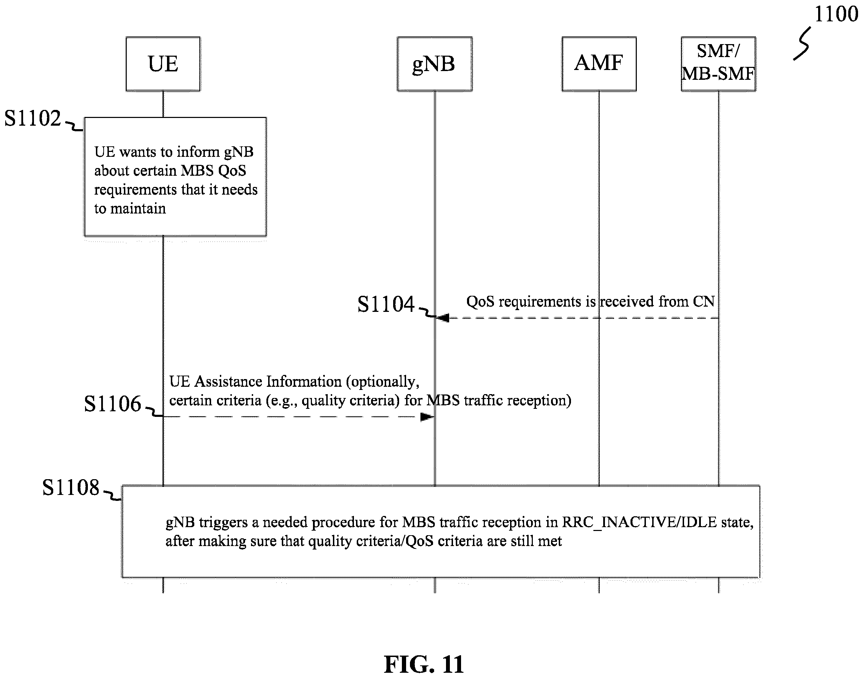

FIG. 11 shows an interaction diagram 1100 that explains the interaction between a UE, a gNB and an AMF for the purpose of enabling the MBS traffic reception in the RRC idle or inactive state in accordance with another example embodiment. In the interaction diagram 1100, it is assumed that the UE is served by the gNB and implemented as the UE 100, and the gNB is implemented as the RAN node 500. The CN entities are represented by an AMF and an SMF or an MB-SMF.

The interaction diagram 1100 starts with a step S1102, in which the UE performs an MBS traffic reception in RRC_CONNECTED state and wants to inform the gNB about certain MBS QoS requirements that it needs to maintain.

Then, the interaction diagram 1100 proceeds to a step S1104, in which the gNB receives one or more QoS requirements from a CN (e.g., the AMF, the SMF or the MB-SMF). The QoS requirements may include, for example, a maximum allowed error rate for the MBS session (e.g., for public safety sessions) and/or a minimum packet delay. The gNB is configured to use these QoS requirements to determine whether to release the RRC connection to move the UE to RRC_INACTIVE state in order for the UE to perform the MBS traffic reception in that state.

Next, the interaction diagram 1100 goes on to a step S1106, in which, instead of indicating its request/preference to switch to RRC_INACTIVE/IDLE state for the MBS traffic reception, the UE indicates certain criteria in UE Assistance Information to the gNB (e.g., a certain MBS quality level (e.g., high quality/low quality/medium quality) that the UE wishes to keep for a certain MBS traffic due to its importance to the UE).

After that, the interaction diagram 1100 proceeds to a step S1108, in which the gNB takes these criteria (together with the QoS requirements) into consideration when deciding whether to move the UE to RRC_INACTIVE/IDLE state for the MBS traffic reception. If the criteria are met, the gNB itself triggers a needed procedure for the MBS traffic reception in RRC_INACTIVE/IDLE state.

In another embodiment, these criteria may act as feedback from all UEs to the gNB about what is an accepted MBS quality level each UE needs to maintain, which helps in case if the switching from the MBS traffic reception in RRC_CONNECTED state to the MBS traffic reception in RRC_IDLE/INACTIVE state impacts all the UEs using the MBS.

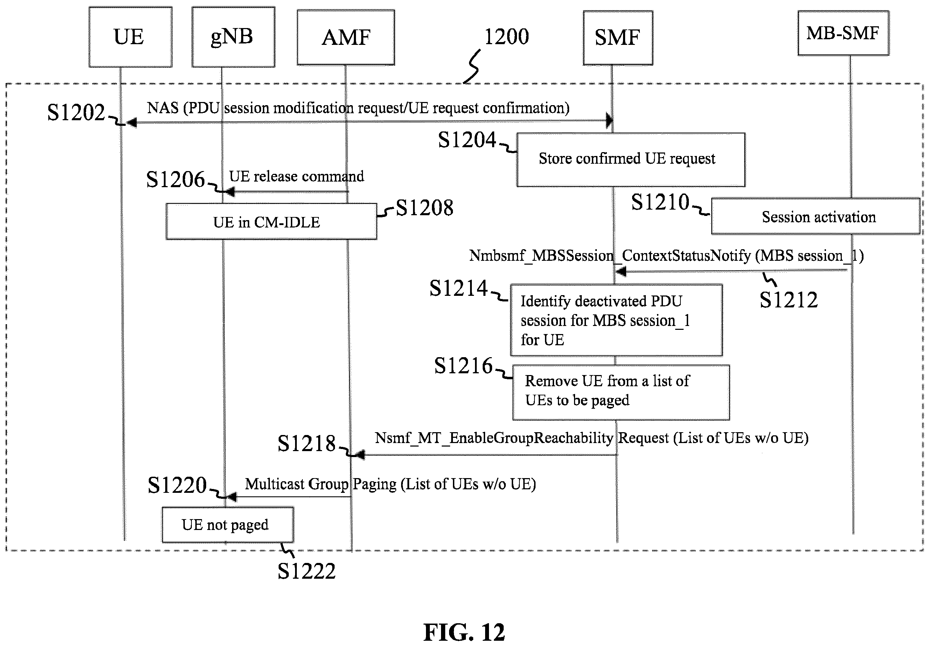

FIG. 12 shows an interaction diagram 1200 that explains the interaction between a UE, a gNB and different CN entities for the purpose of managing UE requests at session activation in accordance with one example embodiment. At the session activation, UEs for which the UE requests for enabling the MBS traffic reception in RRC_IDLE/RRC_INACTIVE state have been granted should not be paged or moved to RRC_CONNECTED state. In the interaction diagram 1200, the CN entities are represented by an AMF, an SMF and an MB-SMF, the UE is assumed to be served by the gNB and may be implemented as the UE 100, and the SMF may be implemented as the CN entity 300.

The interaction diagram 1200 starts with a step S1202, in which the UE has negotiated its request for enabling the MBS traffic reception in RRC_INACTIVE/IDLE state in accordance with the interaction diagram 700.

Then, the interaction diagram 1200 proceeds to a step S1204, in which the SMF stores the result of the negotiation (i.e., that the UE is allowed to receive the MBS traffic in the RRC idle or inactive state). In this embodiment, it is assumed that the UE request for enabling the MBS traffic reception in RRC_IDLE/INACTIVE state has been accepted and confirmed by the SMF.

Further, the interaction diagram 1200 goes on to a step S1206, in which the AMF sends a UE release command to the gNB, i.e., the command to release the RRC connection for the UE. In a next step S1208, the gNB performs the UE transition to a Connection Management (CM)-Idle state to end all connected services.

Subsequently, in a step S1210, an MBS Session 1 is activated by the MB-SMF. The MB-SMF sends an Nmbsmf_MBSSession_ContextStatusNotify (MBS Session 1) message to the SMF in a next step S1212.

After that, the interaction diagram 1200 proceeds to a step S1214, in which, upon receiving the Nmbsmf_MBSSession_ContextStatusNotify (MBS Session 1) message, the SMF identifies that the PDU session associated with the MBS Session 1 is deactivated for the UE. However, due to the confirmed UE request stored in the step S1204, the SMF removes the UE from a list of paged UEs in a next step S1216. Further, the SMF sends the list of paged UEs without the UE as an Namf_MT_EnableGroupReachabilityRequest message to the AMF in a next step S1218.

Next, the interaction diagram 1200 goes on to a step S1220, in which, upon receiving the Namf_MT_EnableGroupReachabilityRequest message, the AMF builds a Multicast Group Paging message using the received list of paged UEs, not including the UE.

The interaction diagram 1200 ends up with a step S1222, in which the gNB receives the Multicast Group Paging which does not include the UE. This means that the UE is not paged.

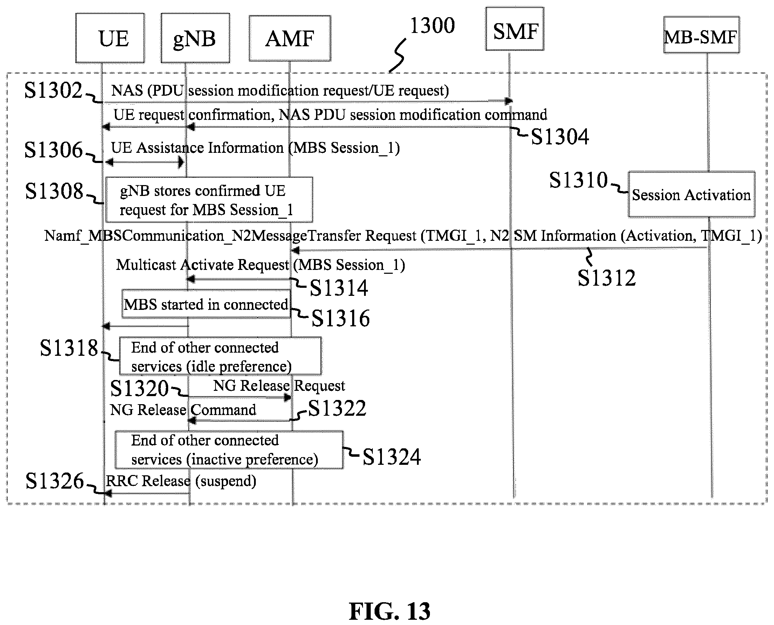

FIG. 13 shows an interaction diagram 1300 that explains the interaction between a UE, a gNB and different CN entities for the purpose of managing UE requests at session activation in accordance with another example embodiment. In the interaction diagram 1300, the CN entities are represented by an AMF, an SMF and an MB-SMF, the UE is assumed to be served by the gNB and may be implemented as the UE 100, gNB may be implemented as the RAN node 500, and the SMF may be implemented as the CN entity 300.

The interaction diagram 1300 starts with a step S1302, in which the UE sends a UE request for enabling the MBS traffic reception in RRC_IDLE/INACTIVE state in an MBS Session 1.

The interaction diagram 1300 proceeds to a step S1304, in which the SMF grants the UE request and sends a corresponding indication/confirmation (e.g., as a PDU session modification command) to the gNB in the same manner as discussed above with reference to the interaction diagram 700. Alternatively, instead of the step S1304, the interaction diagram 1300 may comprise a step S1306, in which the gNB grants the UE request in the same manner as discussed above with reference to the interaction diagram 1000.

Next, the interaction diagram 1300 goes on to a step S1308, in which the gNB stores the confirmed UE request.

After that, the interaction diagram 1300 proceeds to a step S1310, in which the MBS Session 1 is activated by the MB-SMF, and the MB-SMF generates an Namf_MBSCommunication_N2MessageTransferRequest message to activate the MBS Session 1 (TMGI 1).

Further, in a next step S1312, upon receiving the Namf_MBSCommunication_N2MessageTransferRequest message, the AMF generates a Multicast Activate Request towards the gNB. Upon receiving the Multicast Activate Request message, the gNB configures the UE to receive the MBS Session 1 in RRC_CONNECTED state in a next step S1316.

The interaction diagram 1300 then goes on to a step S1318, in which, at the end of other services for which the UE is in RRC_CONNECTED state, only the MBS Session 1 remains. If the UE request stored in the step S1308 is for RRC_IDLE state, the gNB sends an NG Release Request to the AMF in a next step S1320 in order to tear down the NG and move the UE into RRC_IDLE state. The NG Release Command is then sent from the AMF to the gNB first in a next step S1322.

Subsequently, the interaction diagram 1300 proceeds to a step S1324 (which may be an alternative to the step S1318), in which, at the end of other services for which the UE is in RRC_CONNECTED state, only the MBS Session 1 remains. If the UE request stored in the step S1308 is for RRC_INACTIVE state, the gNB generates and sends an RRC Release Request with a "Suspend" Indication for RRC_INACTIVE state to the UE in a last step S1326.

In general, the steps S1324 and S1326 are for the case when the UE is released to RRC_INACTIVE state, while the steps S1318 to S1322 are for the case when the UE is released to RRC_IDLE state. Thus, the gNB performs either the steps S1324 and S1326 or the steps S1318 to S1322.

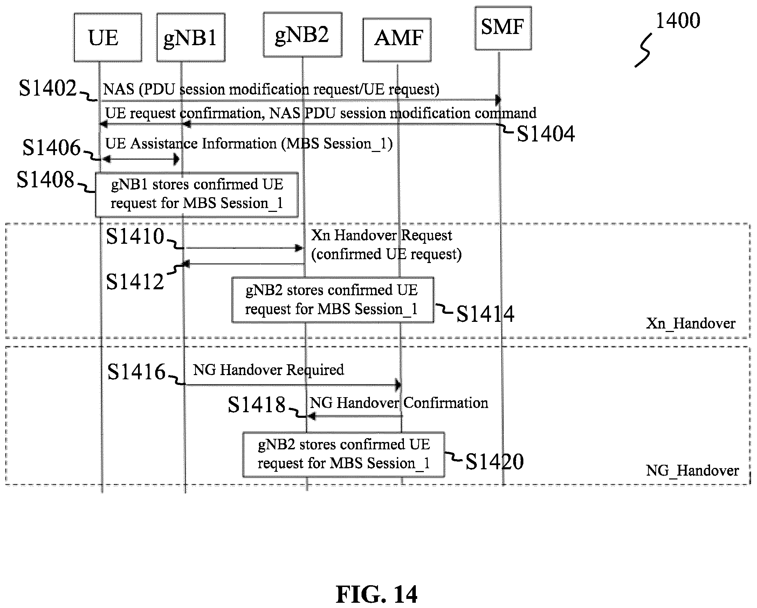

FIG. 14 shows an interaction diagram 1400 that explains the interaction between a UE, two gNBs and different CN entities for the purpose of transferring UE requests in case of different handover scenarios in accordance with one example embodiment. Whenever the UE is in the CM-Connected state and the UE requests for enabling the MBS traffic reception in RRC_IDLE/INACTIVE state are managed by the gNB as presented in the interaction diagram 1300, it is essential that these UE requests are transferred during mobility events, such as an Xn handover or an NG handover. In the interaction diagram 1400, the CN entities are represented by an AMF and an SMF, the UE is assumed to be initially served by a gNB1 and may be implemented as the UE 100, the gNB1 may be implemented as the RAN node 500, and the SMF may be implemented as the CN entity 300.

The interaction diagram 1400 starts with steps S1402-S1404, in which the UE request is accepted and confirmed in accordance with the interaction diagram 700, or with a step S1406, in which the UE request is accepted and confirmed in accordance with the interaction diagram 1000.

Then, the interaction diagram proceeds to a step S1408, in which the gNB1 stores the UE request for an MBS Session 1.

Next, in a step S1410, it is assumed that the Xn handover is performed, and the confirmed UE request is transferred to the target gNB2 as a part of the Xn Handover Request. In a next step S1412, the gNB2 sends a corresponding indication/confirmation of the Xn handover to the gNB1. Consequently, the gNB2 stores the confirmed UE request for the MBS Session 1 in a next step S1414.

Alternatively or additionally, the interaction diagram 1400 comprises a step S1416, in which the NG handover is performed, and the confirmed UE request is transferred to the target gNB2 as a part of the NG Handover Request. In a next step S1418, the AMF sends a corresponding indication/confirmation of the NG handover to the gNB1. Consequently, the gNB2 stores the confirmed UE request for the MBS Session 1 in a next step S1420.

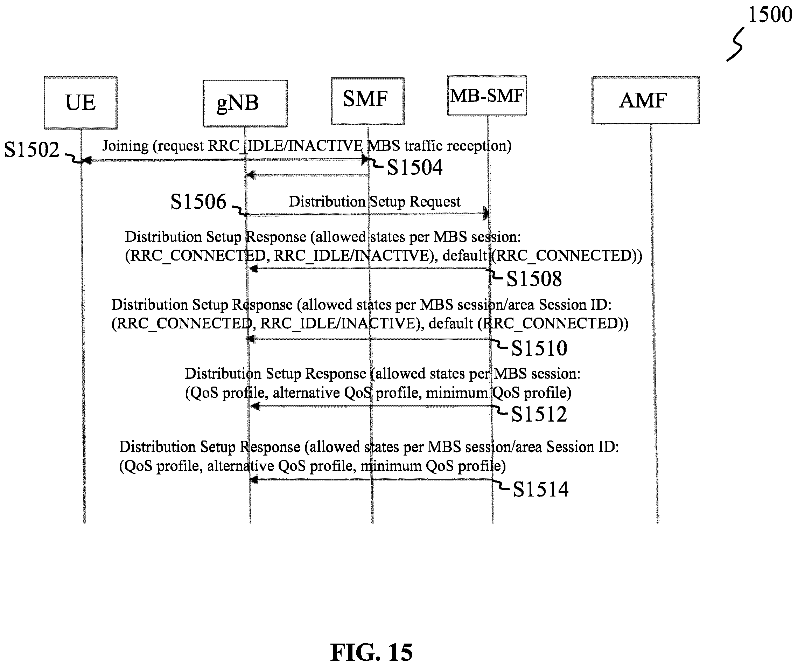

FIG. 15 shows an interaction diagram 1500 that explains the interaction between a UE, a gNB and different CN entities for the purpose of controlling UE requests or preferences in accordance with one example embodiment. In the interaction diagram 1500, the CN entities are represented by an AMF, an SMF and an MB-SMF, the UE is assumed to be served by the gNB and is implemented as the UE 100, and the SMF may be implemented as the CN entity 300.

According to an operator's policy, the UE requests may be controlled in different ways:
1) The MB-SMF stores upon operator's preferences whether an MBS Session is allowed to operate with receiving UEs in CM-Idle state (respectively, CM-Inactive, CM-Connected).
2) The MB-SMF stores upon operator's preferences a default mode for the delivery of the MBS Session. This default mode applies in the absence of any UE requests or preferences for enabling the MBS traffic reception in a certain RRC state.
3) The MB-SMF indicates not only an MBS QoS Profile associated with the MBS session, but also an alternative QoS profile which is allowed as less preferred (i.e., represents a fallback), or could be a "minimum" QoS Profile defined as the lowest QoS profile which is allowed for the MBS Session.

The above-indicated control ways may be also adapted by the MB-SMF based on a per Area Session ID.

The interaction diagram 1500 starts with step S1502-S1504, in which the gNB and the SMF identify the first UE joining the MBS Session. In a next step S1506, the gNB triggers a Distribution Setup Request message to the MB-SMF.

Then, the interaction diagram 1500 proceeds to a step S1508, in which the MB-SMF replies with a Distribution Setup Response message, newly including, in the MBS QoS Profile, the allowed modes for the MBS Session (e.g., whether the MBS session 1 is allowed to run in RRC_IDLE state of RRC_INACTIVE state for the UE). The MB-SMF may also include a "default state" corresponding to a network-preferred state of operation in the case where no UE request or preference is expressed.

Optionally, the interaction diagram 1500 may comprise a step S1510 which is similar to the step S1508 but supplemented with a per-MBS Session ID and/or a per-Area Session ID.

Alternatively or additionally, the interaction diagram 1500 comprises a step S1512, in which the MB-SMF sends, in the Distribution Setup Response, multiple MBS QoS Profiles, all allowed but in a ranked order, i.e. with the first one as the preferred one and the last one as the minimum acceptable QoS profile. The QoS profile may include information, such as a certain maximum acceptable Error Rate for the MBS session (e.g., for public safety sessions) and/or a certain maximum packet delay for the MBS traffic.

Optionally, the interaction diagram 1500 may comprise a step S1514 which is similar to the step S1512 but supplemented with a per-Area Session ID.

It should be noted that each step or operation of the method 200, 400, 600, as well as the interaction diagrams 700-1500, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed, for example, by the processor 102, 302, or 502, respectively. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

## Claims

1. A User Equipment (UE) in a wireless communication network, comprising:
at least one processor; and
at least one memory comprising a computer program code;
wherein the at least one memory and the computer program code are configured to,
with the at least one processor, cause the UE to:
perform a Multicast or Broadcast Service (MBS) traffic reception in a Radio Resource Control (RRC) connected state; and
if a first trigger event occurs in the RRC connected state, transmit, to a Radio Access Network (RAN) node or a Core Network (CN) node, a first UE request for switching from the MBS traffic reception in the RRC connected state to the MBS traffic reception in an RRC idle or inactive state.

2. The UE of claim 1, wherein the at least one memory and the computer program code are further configured to, with the at least one processor, cause the UE to:
receive, from the RAN node or the CN node, a first indication that the first UE request is granted or rejected; and
perform the MBS traffic reception in the RRC idle or inactive state.

3. The UE of claim 2, wherein the at least one memory and the computer program code are configured to, with the at least one processor, cause the UE to:
(i) transmit, to the CN entity, the first UE request as a Protocol Data Unit (PDU) session modification request, and (ii) receive, from the CN entity, the first indication as a PDU session modification command; or
(i) transmit, to the CN entity, the first UE request as a mobility registration request message, and (ii) receive, from the CN entity, the first indication as a mobility registration accept message.

4. The UE of claim 2, wherein the at least one memory and the computer program code are configured to, with the at least one processor, cause the UE to:
transmit, to the RAN node, the first UE request by using an RRC signalling; and
receive, from the RAN node, the first indication by using the RRC signalling.

5. The UE of any one of claims 1 to 4, wherein the first trigger event comprises at least one of:
a battery level of the UE goes below a threshold;
a priority degree of an MBS traffic changes from a high priority value to a low priority value; and
a priority degree of a packet error rate of the MBS traffic reception changes from a high priority value to a low priority value.

6. The UE of any one of claims 1 to 5, wherein the at least one memory and the computer program code are further configured to, with the at least one processor, cause the UE to:
(i) when a second trigger event occurs in the RRC idle or inactive state, transmit, to the RAN node or the CN entity, a second UE request for switching from the MBS traffic reception in the RRC idle or inactive state to the MBS traffic reception in the RRC connected state, and (ii) receive, from the RAN node or the CN entity, a second indication that the second UE request is granted or rejected; or
(i) when a third trigger event occurs in the RRC idle or inactive state, transmit, to the RAN node or the CN entity, a third UE request for switching between the MBS traffic reception in the RRC inactive state and the MBS traffic reception in the RRC idle state, and (ii) receive, from the RAN node or the CN entity, a third indication that the third UE request is granted or rejected.

7. The UE of claim 6, wherein the at least one memory and the computer program code are configured to, with the at least one processor, cause the UE to:
(i) transmit, to the CN entity, each of the second UE request and the third UE request as a PDU session modification request, and (ii) receive, from the CN entity, each of the second indication and the third indication as a PDU session modification command; or
(i) transmit, to the CN entity, each of the second UE request and the third UE request as a mobility registration request message, and (ii) receive, from the CN entity, each of the second indication and the third indication as a mobility registration accept message.

8. The UE of claim 6, wherein the at least one memory and the computer program code are configured to, with the at least one processor, cause the UE to:
transmit, to the RAN node, each of the second UE request and the third UE request by using an RRC signalling; and
receive, from the RAN node, each of the second indication and the third indication by using the RRC signalling.

9. The UE of any one of claims 6 to 8, wherein
the second trigger event comprises at least one of: (i) a battery level of the UE goes above a threshold, (ii) a priority degree of an MBS traffic changes from a low priority value to a high priority value, and (iii) a priority degree of a packet error rate of the MBS traffic reception changes from a low priority value to a high priority value; and
the third trigger event comprises at least one of: (i) the battery level of the UE goes down and reaches a first threshold or goes up and reaches a second threshold, and (ii) there is an increase or decrease in the priority degree of the packet error rate of the MBS traffic reception.

10. A Core Network (CN) node in a wireless communication system, comprising:
at least one processor; and
at least one memory comprising a computer program code;
wherein the at least one memory and the computer program code are configured to, with the at least one processor, cause the CN entity to:
receive, from a User Equipment (UE), a first UE request for switching from a Multicast or Broadcast Service (MBS) traffic reception in a Radio Resource Control (RRC) connected state to the MBS traffic reception in an RRC idle or inactive state; and
based on at least one MBS-associated requirement, decide that the first UE request is granted or rejected.

11. The CN entity of claim 10, wherein the at least one memory and the computer program code are further configured to, with the at least one processor, cause the CN entity to transmit, to the UE and a Radio Access Network (RAN) node serving the UE, a first indication that the first UE request is granted or rejected.

12. The CN entity of claim 11, wherein the at least one memory and the computer program code are configured to, with the at least one processor, cause the CN entity to:
(i) receive, from the UE, the first UE request as a Protocol Data Unit (PDU) session modification request, and (ii) transmit, to the UE and the RAN node serving the UE, the first indication as a PDU session modification command; or
(i) receive, from the UE, the first UE request as a mobility registration request message, and (ii) transmit, to the UE and the RAN node serving the UE, the first indication as a mobility registration accept message.

13. The CN entity of any one of claims 10 to 12, wherein the at least one memory and the computer program code are further configured to, with the at least one processor, cause the CN entity to:
(i) receive, from the UE, a second UE request for switching from the MBS traffic reception in the RRC idle or inactive state to the MBS traffic reception in the RRC connected state, (ii) based on the at least one MBS-associated requirement, decide that the second UE request is granted or rejected, and (iii) transmit, to the UE and a RAN serving the UE, a second indication that the second UE request is granted or rejected; or
(i) receive, from the UE, a third UE request for switching between the MBS traffic reception in the RRC inactive state and the MBS traffic reception in the RRC idle state, (ii) based on the at least one MBS-associated requirement, decide that the third UE request is granted or rejected, and (iii) transmit, to the UE and the RAN node serving the UE, a third indication that the third UE request is granted or rejected.

14. The CN entity of claim 13, wherein the at least one memory and the computer program code are configured to, with the at least one processor, cause the CN entity to:
(i) receive, from the UE, each of the second UE request and the third UE request as a PDU session modification request, and (ii) transmit, to the UE and the RAN node serving the UE, each of the second indication and the third indication as a PDU session modification command; or
(i) receive, from the UE, each of the second UE request and the third UE request as a mobility registration request message, and (ii) transmit, to the UE and the RAN node serving the UE, each of the second indication and the third indication as a mobility registration accept message.

15. The CN entity of any one of claims 10 to 14, wherein the at least one MBS-associated requirement comprises at least one of:
a Quality-of-Service (QoS) parameter or policy defined by an operator of the wireless communication network or configured by another CN entity responsible for MBS management;
an allowed packet error rate for an MBS session; and
a maximum delay for the MBS session.

16. A Radio Access Network (RAN) node in a wireless communication system, comprising:
at least one processor; and
at least one memory comprising a computer program code;
wherein the at least one memory and the computer program code are configured to, with the at least one processor, cause the RAN node to:
receive, from a User Equipment (UE), a first UE request for switching from a Multicast or Broadcast Service (MBS) traffic reception in a Radio Resource Control (RRC) connected state to the MBS traffic reception in an RRC idle or inactive state; and
based on at least one MBS-associated requirement, decide that the first UE request is granted or rejected.

17. The RAN node of claim 16, wherein the at least one memory and the computer program code are further configured to, with the at least one processor, cause the RAN node to transmit, to the UE, a first indication that the first UE request is granted or rejected.

18. The RAN node of claim 17, wherein the at least one memory and the computer program code are configured to, with the at least one processor, cause the RAN node to:
receive, from the UE, the first UE request by using an RRC signalling; and
transmit, to the UE, the first indication by using the RRC signalling.

19. The RAN node of any one of claims 16 to 18, wherein the at least one memory and the computer program code are configured to, with the at least one processor, cause the RAN node to:
if the first UE request is granted, store the first UE request; and
if a handover procedure is initiated for the UE, transmit the stored first UE request to a target RAN node.

20. The RAN node of any one of claims 16 to 19, wherein the at least one memory and the computer program code are further configured to, with the at least one processor, cause the RAN node to:
(i) receive, from the UE, a second UE request for switching from the MBS traffic reception in the RRC idle or inactive state to the MBS traffic reception in the RRC connected state, (ii) based on the at least one MBS-associated requirement, decide that the second UE request is granted or rejected, and (iii) transmit, to the UE and a RAN serving the UE, a second indication that the second UE request is granted or rejected; or
(i) receive, from the UE, a third UE request for switching between the MBS traffic reception in the RRC inactive state and the MBS traffic reception in the RRC idle state, (ii) based on the at least one MBS-associated requirement, decide that the third UE request is granted or rejected; and (iii) transmit, to the UE, a third indication that the third UE request is granted or rejected.

21. The RAN node of claim 20, wherein the at least one memory and the computer program code are configured to, with the at least one processor, cause the RAN node to:
receive, from the UE, each of the second UE request and the third UE request by using an RRC signalling; and
transmit, to the UE, each of the second indication and the third indication by using the RRC signalling.

22. The RAN node of claim 20 or 21, wherein the at least one memory and the computer program code are configured to, with the at least one processor, cause the RAN node to:
if the second UE request or the third UE request is granted, store the second UE request or the third UE request; and
if a handover procedure is initiated for the UE, transmit the stored second UE request or the stored third UE request to a target RAN node.

23. The RAN node of any one of claims 16 to 22, wherein the at least one MBS-associated requirement comprises at least one of:
a Quality-of-Service (QoS) parameter or policy defined by an operator of the wireless communication network or configured by a Core Network (CN) entity responsible for MBS management;
an allowed packet error rate for an MBS session; and
a maximum delay for the MBS session.
